Europäisches Patentamt

European Patent Office

Office européen des brevets

(11) Veröffentlichungsnummer: **0 264 900**
**A2**

(12) **EUROPÄISCHE PATENTANMELDUNG**

(21) Anmeldenummer: 87115321.9

(22) Anmeldetag: 20.10.87

(51) Int. Cl.⁴: **B01D 36/02** , B01D 25/12 , B01D 29/30

(30) Priorität: 21.10.86 DE 3635767

(43) Veröffentlichungstag der Anmeldung:
27.04.88 Patentblatt 88/17

(84) Benannte Vertragsstaaten:
AT CH ES FR GB IT LI NL SE

(71) Anmelder: Bähr, Albert
Am Hungerberg 10
D-6682 Ottweiler 2(DE)

(72) Erfinder: Bähr, Albert
Am Hungerberg 10
D-6682 Ottweiler 2(DE)

(74) Vertreter: Brose, Karl A.
Patentanwalte, Karl A. Brose und D. Karl
Brose Dipl.-Ing. Wienerstrasse 2
D-8023 München Pullach(DE)

(54) Vorentwässerungsstufe zum Entwässern von Schlamm und ähnlichen Substanzen.

(57) Eine Vorentwässerungsstufe (100) zum kontinuierlichen Entwässern von Schlamm umfaßt einen U-förmigen Rohrkörper (106), in dessen einen Schenkel Schlamm und Flockungsmittel kontinuierlich eingeleitet wird und vermischt wird. Aus dem oberen Ende des anderen Schenkels gelangt der Schlamm in Überlauf in einen Entwässerungskorb (104), der einen aufrechtstehenden Siebkorb (130) umfaßt, über welchen der Schlamm vorentwässert wird. Eine innnerhalb des Siebkorbes (130) angeordnete Reinigungseinrichtung (138) in Form eines drehangetriebenen Abstreifsterns verhindert ein Zusetzen der Sieböffnungen. Der vorentwässerte Schlamm wird über einen Austragskanal (150), dessen Querschnitt über eine Regelklappe (158) variierbar ist, der Filterpresse (160) zugeführt.

Fig. 1

EP 0 264 900 A2

## Vorentwässerungsstufe zum Entwässern von Schlamm und ähnlichen Substanzen

Die Erfindung betrifft eine Vorentwässerungsstufe zum Entwässern von Schlamm und ähnlichen Substanzen, insbesondere als Vorstufe für eine Filterpresse.

Aus der DE-PS 28 44 715 ist eine Vorentwässerungsstufe für eine Bandfilterpresse bekannt, die aus einer Schlammkammer besteht, in die eine Reihe von zylindrischen Filterkörpern ganz oder teilweise in den Schlamm untergetaucht angeordnet sind, wobei diese Filterkörper trommelförmige Körper aus Filtermaterial mit im wesentlichen horizontal angeordneter Trommelachse sind. Die einzelnen Filterkörper sind drehangetrieben und weisen jeweils einen seitlichen Filtratauslaß auf, aus welchem das von allen Seiten aus dem Schlamm in der Schlammkammer eindringende Filtrat seitlich herausgeführt wird und mit einer seitlichen Auffangrinne abgeführt werden kann.

Aus der Zeitschrift "Industrieanzeiger" Nr. 45 vom 6.6.1986/108. Jahrgang, Seite 38 der "Technische Umschau" ist eine Vorentwässerungsstufe bekannt, welche aus einer Anzahl von Filtersäcken besteht, die nach Befüllung mit Klärschlamm statisch oder unter Druckbeaufschlagung das Filterwasser abgeben. Eine solche Vorentwässerungsstufe ist jedoch insbesondere nicht zur Verwendung im Zusammenhang mit einer kontinuierlich oder quasi kontinuierlich arbeitenden Filterpresse geeignet. Zumdem ist die Filtrationsleistung einer solchen Vorentwässerungsstufe bei großem Bauvolumen relativ niedrig.

Der Erfindung liegt die Aufgabe zugrunde, die Leistungsfähigkeit der eingangs genannten Vorentwässerungsstufe zu verbessern, wobei sie gleichzeitig relativ kompakt sein soll und als kontinuierlich arbeitende Vorstufe für eine Filterpresse geeignet sein soll.

Diese Aufgabe wird im wesentlichen gelöst durch einen Misch-und Reaktionsraum mit einem Eingang für Schlamm und Flockungsmittel zum kontinuierlichen Zuführen von Schlamm und Flockungsmittel in den Misch-und Reaktionsraum, durch eine Vorrichtung zum kontinuierlichen Zuführen von Schlamm aus dem Misch-und Reaktionsraum in einen Entwässerungskorb, durch einen Entwässerungskorb mit mindestens einem vorzugsweise zylindrischen Siebkorb mit vertikaler Zylinderachse zum hydrostatischen Entwässern des Schlamms, wobei innerhalb des Entwässerungskorbs das Filtrat den mindestens einen Siebkorb in radialer Richtung durchströmt, durch eine Vorrichtung zum Affangen und Abführen des Filtrats, durch einen unterhalb des Siebkorbs angeordneten Austragskanal zum Abführen des vorentwässerten Schlamms, sowie durch eine im Austragskanal angeordnete Einrichtung zum Steuern der Menge des abzuführenden vorentwässerten Schlamms.

Erfindungsgemäß ist somit im wesentlichen eine Kombination eines Mischers für Schlamm und Flockungsmittel mit nachgeschaltetem Entwässerungskorb und zwischenge schalteter Reaktionsstrecke vorgesehen. Der wesentliche Vorteil der erfindungsgemäßen Anordnung liegt unter anderem darin, daß der hydrostatische Druck der innerhalb des Entwässerungskorbs befindlichen Suspension als Filtrationsdruck ausgenutzt wird. und daß allein durch die Füllhöhe im Entwässerungskorb der Filtrationsdruck kontinuierlich ansteigend verändert werden kann.

Gemäß einem besonders vorteilhaften Merkmal der Erfindung ist der Misch-und Reaktionsraum als vertikal stehender, U-förmiger Rohrkörper ausgebildet, wobei der Eingang für Schlamm und Flockungsmittel am oberen Endbereich des einen Schenkels des Rohrkörpers angeordnet ist und wobei der obere Endbereich des anderen Schenkels des Rohrkörpers mit der Vorrichtung zum kontinuierlichen Zuführen von Schlamm in den Entwässerungskorb in Verbindung steht. In diesem Fall bildet der eine Schenkel des U-förmigen Rohrkörpers eine Misch-strecke für Schlamm und Flockungsmittel und der andere, - schlammausgangseitige Schenkel des U-förmigen Rohrkörpers die Reaktionsstrecke.

In konstruktiv besonders einfacher Weise wird der Schlamm dadurch vom Misch-und Reaktionsraum zum Entwässerungskorb geführt, daß der obere Endbereich des anderen Schenkels des U-förmigen Rohrkörpers bezüglich des Entwässerungskorbs in einer solchen Höhe angeordnet ist, daß der aus dem oberen Endbereich des anderen Schenkels austretende Schlamm unter Schwerkraftwirkung dem oberen Ende des Entwässerungskorbes zugeführt wird. Aufwendige Pumpeneinrichtungen und dergleichen erübrigen sich hierbei.

Vorzugsweise ist gemäß einem weiteren Merkmal der Erfindung zum Zuführen des Schlammes aus dem Misch-und Reaktionsraum in den Entwässerungskorb eine nach oben offene Kanaleinrichtung vorgesehen, über die der Schlamm aus dem Reaktionsraum in den Entwässerungskorb strömt. Dadurch, daß die Kanaleinrichtung nach oben offen ist, kann der zu entwässernde Schlamm jederzeit ohne weiteres zu Analysezwecke inspiziert werden.

Zum effektiven Vermischen von Schlamm und Flockungsmittel bzw. anderen Reaktionsstoffen ist gemäß einem weiteren vorteilhaften Merkmal der Erfindung im Misch-und Reaktionsraum vorzugsweise im Bereich des Eingangs für Schlamm und Flockungsmittel eine Mischeinrichtung insbesondere in Form eines Wirbelrades angeordnet. Andere, dem Fachmann geläufige Mischeinrichtungen können selbstverständlich ebenso verwendet werden. Bei U-förmiger Ausbildung des Misch-und Reaktionsraumes bildet somit der dem Schlammeingang zugeordnete Schenkel die Mischzone und der dem Schlammausgang zugeordnete Schenkel eine Beruhigungszone.

Gemäß der vorliegenden Erfindung umfaßt der Entwässerungskorb insbesondere ein oder zwei Siebkörbe. Falls ein einziger, aufrechtstehender Siebkorb vorgesehen ist, wird der zu entwässernde Schlamm dem Inneren des Siebkorbs zugeleitet. Das Filtrat fließt dann nach außen ab, wird dort aufgefangen und in geeigneter Weise abgeleitet. Der vorentwässerte Schlamm wird von unterhalb des Siebkorbs zur weiteren Verarbeitung kontinuierlich oder diskontinuierlich abgeführt.

Eine besonders effektive Entwässerung ergibt sich jedoch dann, wenn gemäß einem besonders bevorzugten Merkmal der Erfindung zwei konzentrische Siebkörbe vorgesehen sind und der Schlamm dem zwischen den beiden Siebkörben vorhandenen Ringraum zugeleitet wird. Der Schlamm kann dann sowohl radial nach innen als auch radial nach außen entwässert werden.

Um die Entwässerungswirkung des Entwässerungskorbes zu steigern und ein sukzessives Zusetzen der Öffnungen des Siebkorbes wirksam zu verhindern, ist weiterhin erfindungsgemäß eine Vorrichtung zum Reinigen des mindestens einen Siebkorbs vorgesehen. Diese Reinigungsvorrichtung wird zweckmäßigerweise von einer rotierenden, eine Wandung des mindestens einen Siebkorbs überstreichenden Abstreifvorrichtung gebildet, welche beispielsweise mit der Sieboberfläche in Kontakt befindliche, vertikale Bürstenleisten umfaßen kann.

Vorzugsweise ist die Abstreifvorrichtung innerhalb des schlammgefüllten Raumes angeordnet und weist mehrere vertikale, sich radial erstreckende Flügel auf, die den schlammgefüllten Raum in mehrere Segmente aufteilen, wobei diese Flügel als Schlammschikanen dienende Öffnungen aufweisen. Hierdurch wird die im Entwässerungsvolumen befindliche Suspension durch die sich kontinuierlich drehende Abstreifvorrichtung ständig in Bewegung gehalten, wodurch die Wirksamkeit der Entwässerung weiter verbessert wird.

In weiterer Ausbildung der Erfindung ist vorgesehen, daß die im Austragskanal angeordnete Einrichtung zum Steuern der Menge des abzuführenden vorentwässerten Schlamms von einer steuerbaren bzw. regelbaren Klappe oder einem steuerbaren bzw. regelbaren Schieber gebildet ist. Diese Klappe bzw. dieser Schieber regelt die ausgetragene Menge an vorentwässertem Schlamm beispielsweise in Abhängigkeit vom Prozentsatz der Trockensubstanz oder von anderen Betriebsbedingungen.

Gemäß einem besonders vorteilhaften Merkmal der Erfindung ist schließlich vorgesehen, daß zumindest ein Teil des Bodens des Austragskanals von einem Filterelement der Filterpresse gebildet ist, so daß der gesamte hydrostatische Druck aus der Vorentwässerungsstufe als Filtrationsdruck an der Filterpresse wirksam wird. Die erfindungsgemäße Vorentwässerungsstufe kann daher besonders wirksam insbesondere dann eingesetzt werden, wenn sie direkt oberhalb eines Filterbandes der ihr zugeordneten Filterpresse angeordnet ist.

Im folgenden werden mehrere Ausführungsbeispiele der Erfindung anhand der Zeichnung näher erläutert. In der Zeichnung zeigen in halbschematischer Darstellung:

Fig. 1 eine geschnittene Seitenansicht der erfindungsgemäßen Vorentwässerungsstufe einschließlich der ihr zugeordneten Filterpresse,

Fig. 2 eine Draufsicht auf die Vorentwässerungsstufe sowie einen Teil der ihr zugeordneten Filterpresse gemäß Fig. 1,

Fig. 3 eine Seitenansicht der Vorentwässersstufe gemäß Fig. 2 in Richtung des Pfeiles II,

Fig. 4 eine Schnittansicht durch die Vorentwässerungsstufe gemäß Fig. 2 in Richtung der Pfeile IV-IV, und

Fig. 5 einen Schnitt durch den Entwässerungskorb eines weiteren Ausführungsbeispiels der erfindungsgemäßen Vorentwässerungsstufe mit zwei konzentrischen Siebkörben.

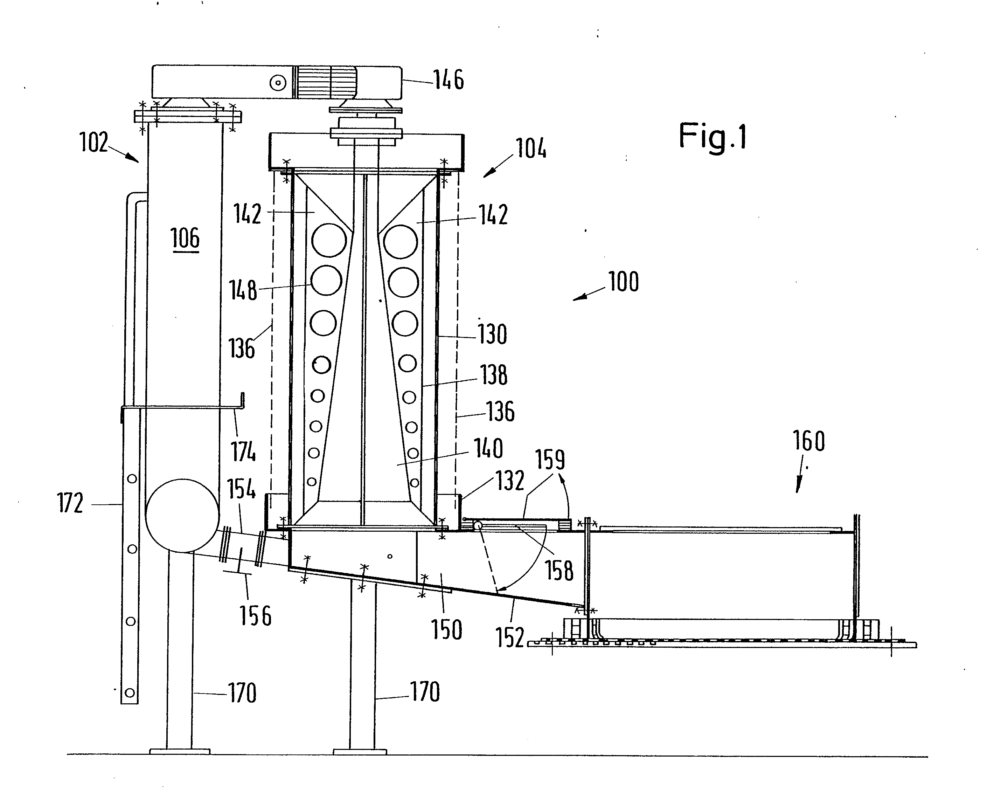

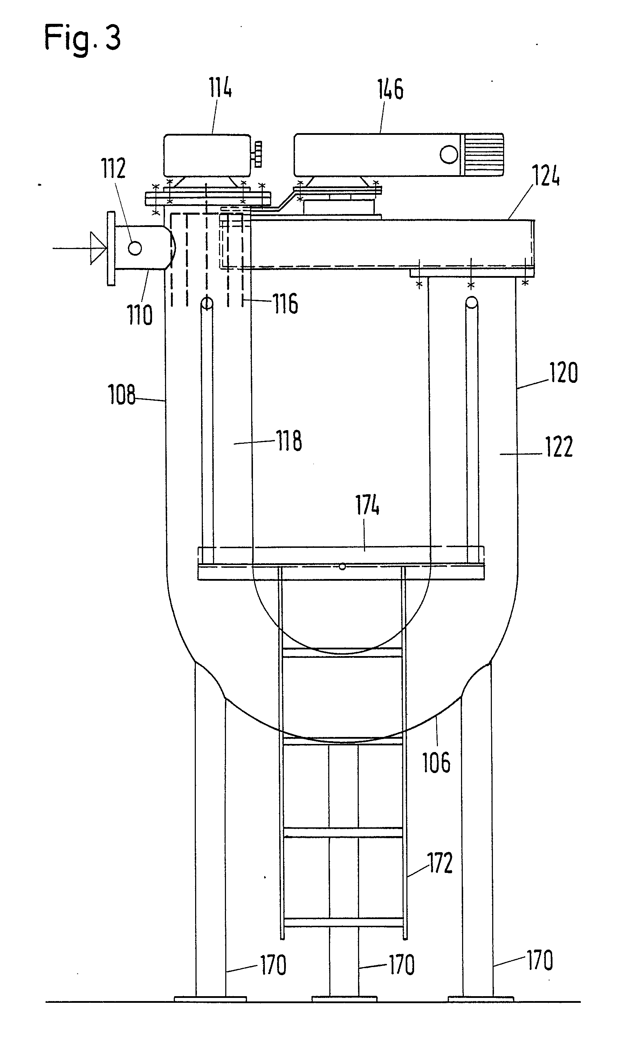

Die in den Fig. 1 bis 4 in halbschematischer Darstellung gezeigte Vorentwässerungsstufe 100 umfaßt als wesentliche Komponenten einen Misch-und Reaktionsraum 102 sowie einen hiermit verbundenen Entwässerungskorb 104. Der Misch-und Reaktionsraum 102 ist als senkrechtstehender, U-förmiger Rohrkörper 106 ausgebildet und weist im Falle des dargestellten Ausführungsbeispiels eine Höhe von 160 cm und eine Breite von 100 cm auf. Am oberen Endbereich des einen Schenkels 108 des Rohrkörpers 106 befindet sich ein Zuführstutzen 110, über den dem Rohrkörper 106 der zu entwässernde Schlamm unter Beimischung von chemischen Zusätzen wie insbesondere Flockungsmittel über die Dosiereinrichtung 112 zugeführt wird. Am oberen Ende des Schenkels 108 ist ein regelbarer Getriebemotor 114 angeflanscht, welcher ein Wirbelrad 116 antreibt, das im Bereich des Zuführstutzens 110 innerhalb des Schenkels 108 angeordnet ist und für eine gute Vermischung von Schlamm und Flockungsmittel sorgt. Dementsprechend wird der vom Schenkel 108 definierte Raum 116 auch Misch-und Wirbelzone 118 genannt.

Der andere Schenkel 120 des U-förmigen Rohrkörpers 106 dient der Beruhigung des in der Zone 118 durchwirbelten Substrats und definiert somit die sogenannte Beruhigungszone 122.

Das obere Ende des Schenkels 120 des U-förmigen Rohrkörpers 106 endet etwa in Höhe der inneren Unterseite des Zuführstutzens 110 und ist mit einem nach oben offenen Kanalsystem 124 verbunden, in welches der mit Flockungsmittel versetzte und über den Zuführstutzen 110 in den Rohrkörper 106 eingeführte Schlamm durch freien Überlauf gelangt.

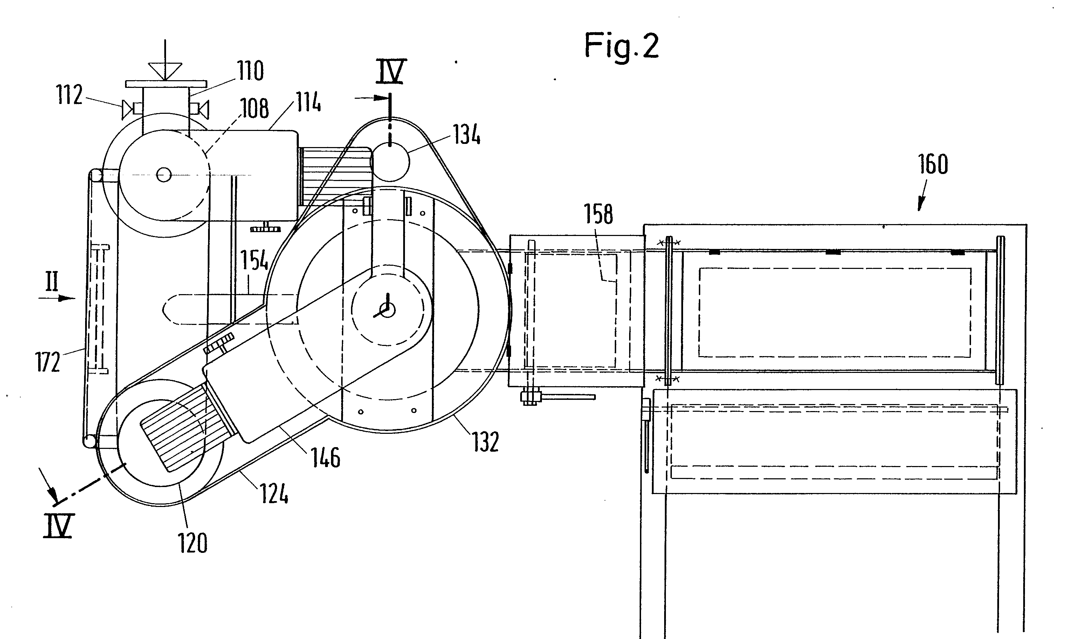

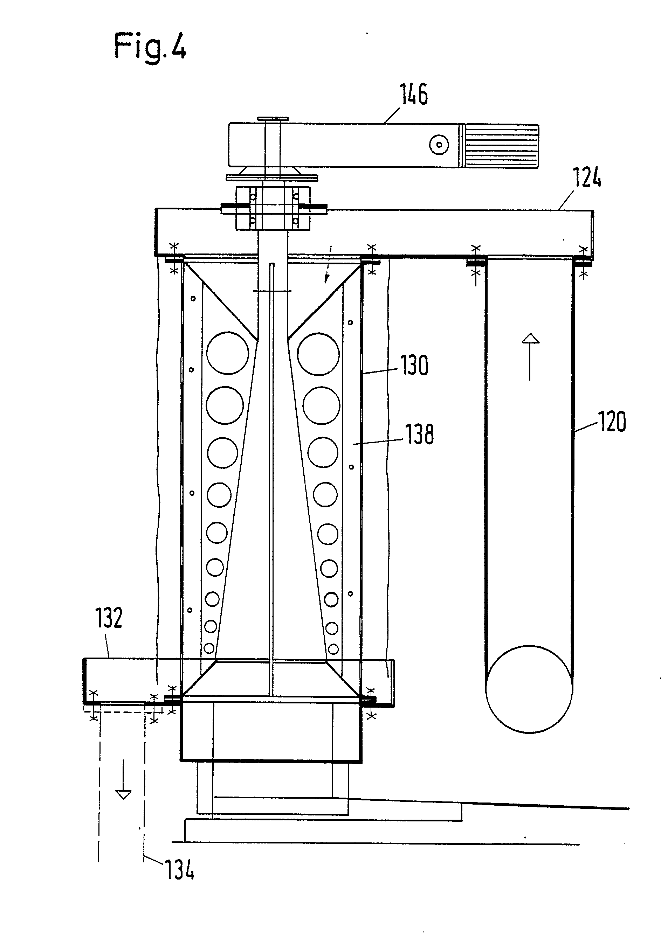

Über das Kanalsystem 124 wird der zu entwässernde Schlamm nunmehr dem Entwässerungskorb 104 zugeführt. Der Entwässerungskorb 104 umfaßt einen senkrechtstehenden Siebkorb 130 mit vertikaler Achse und einer Höhe von etwa 150 cm. Der Durchmesser des Siebkorbs beträgt im Falle des dargestellten Ausführungsbeispiels 60 cm. Über das Kanalsystem 124 wird der zu entwässernde Schlamm in das Innere des Siebkorbs 130 geleitet, wobei der Schlamm aufgrund des sich aufbauenden hydrostatischen Druckes der Suspension durch die Öffnungen des Siebkorbs 130 hindurch entwässert wird. Am unteren Ende des Siebkorbs 130 ist eine um den Siebkorb 130 herum verlaufende Sammelrinne 132 zum Auffangen und Sammeln des durch die Sieböffnungen hindurchgetretenen Filtrats angeordnet. Das aufgefangene und gesammelte Filtrat wird sodann über eine mit der Sammelrinne 132 verbundene Abführleitung 134 (vgl. Fig. 2 und 4) abgeführt.

Der Siebkorb 130 besteht vorzugsweise aus Stahl und weist geeignete Entwässerungsstrukturen auf; insbesondere kann er als Spaltsieb ausgebildet sein. Außerhalb des Siebkorbs 130 ist vom Siebkorb 130 beabstandet ein Tuch 136 angeordnet, welches am Kanalsystem 124 befestigt ist und als Spritzschutz dient. Die unteren Enden des Tuchs 136 liegen innerhalb der Sammelrinne 132.

Innerhalb des Siebkorbs 130 ist eine Reinigungsvorrichtung 138 angeordnet, welche eine vertikale, zur Achse des Siebkorbs 130 konzentrische, sich nach unten konisch erweiternde Welle 140 umfaßt, welche vier vertikale, sich radial nach außen erstreckende Flügel 142 trägt, an deren äußeren, vertikalen Kanten nicht näher dargestellte Bürstenleisten befestigt sind, die mit der inneren Oberfläche des Siebkorbs 130 in Berührung stehen. Die Welle 140 wird mittels eines oberhalb des Siebkorbes 130 angeflanschten Getriebemotors 146 angetrieben. Die sich drehende Reinigungsvorrichtung 138 aktiviert die Filterfläche des Siebkorbes 130, indem die sich ansetzenden Feststoffe immer wieder abgestreift werden und so die Sieböffnungen offengehalten werden. In den sich in radialer Richtung erstreckenden Flügeln 142 sind kreisförmige Öffnungen 148 ausgebildet, die über die gesamte Höhe der Flügel verteilt sind und als Schlammschikanen dienen.

Unterhalb des Siebkorbs 130 ist ein - schachtförmiger Austragskanal 150 angeordnet, über den der vorentwässerte Schlamm der insgesamt mit der Bezugsziffer 160 bezeichneten Filterpresse zur weiteren Entwässerung des Schlamms zugeleitet wird. Im Falle des Ausführungsbeispiels gemäß Fig. 1 bis 4 befindet sich die Filter presse 160 neben der Vorentwässerungsstufe 100 und der Boden 152 des Austragskanals 150 ist zur Filterpresse 160 hin um etwa 7,5° geneigt.

Die Basis des U-förmigen Rohrkörpers 106 ist über eine mittels eines Schiebers 156 verschließbare Rohrleitung 154 mit dem Austragskanal 150 verbunden, um den Rohrkörper 106 bei Bedarf auf einfache Weise entleeren zu können.

In dem den Siebkorb 130 und die Filterpresse 160 verbindenden Austragskanal 150 ist eine verschwenkbare Regelklappe 158 angeordnet, welche den Austragskanal 150 wahlweise vollkommen verschließen, vollkommen freigeben oder teilweise freigeben kann, je nach Betriebsart der Anlage und je nach Flüssigkeitsgehalt des vorentwässerten Schlamms. Über eine oberhalb der Regelklappe 158 angeordnete Inspektionsklappe 159 ist das Innere des Austragskanals 150 von außen zugänglich.

Die Vorentwässerungsstufe 100 ist insgesamt auf Ständern 170 getragen. Eine Leiter 172 ist am Rohrkörper 106 befestigt. Über diese Leiter 172 erreicht man eine Plattform 174, von der aus Wartungsarbeiten vorgenommen werden können und der aus dem Rohrkörper 106 austretende bzw. in den Siebkorb 130 eintretende Schlamm inspiziert werden kann.

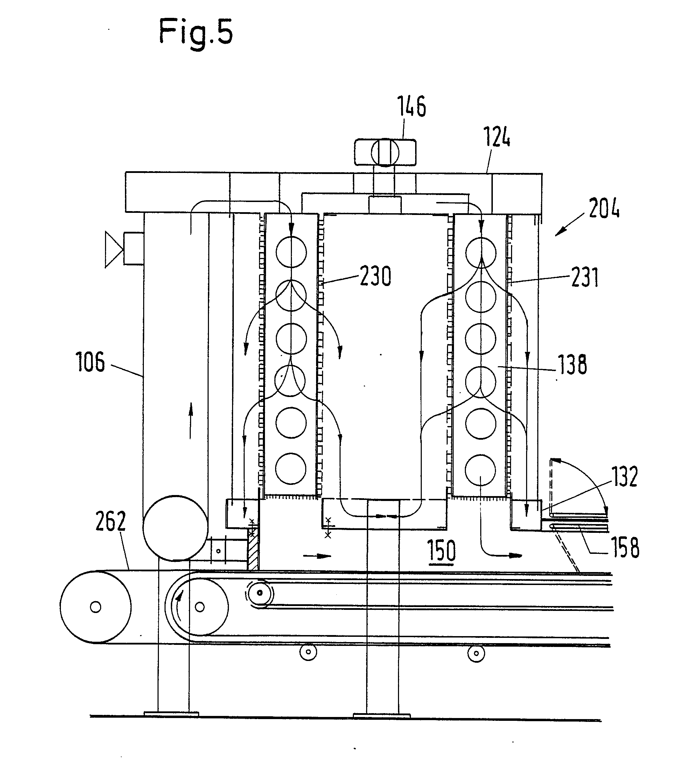

Der Aufbau und die Wirkungsweise der in Fig. 5 dargestellten alternativen Ausführungsform einer Vorentwässerungsstufe entspricht im allgemeinen derjenigen Vorentwässerungsstufe, wie sie anhand der Fig. 1 bis 4 beschrieben wurde. Es wird demnach hier lediglich auf die wesentlichen Unterschiede eingegangen.

Im Falle des Ausführungsbeispiels gemäß Fig. 5 umfaßt der Entwässerungskorb 204 zwei konzentrische Siebkörbe 230, 231 und der vorzuentwässernde Schlamm wird in den Ringraum zwischen den beiden konzentrischen Siebkörben 230, 231 eingeführt. Hierdurch ergibt sich eine besonders effektive Vorentwässerung, nachdem das Filtrat im Falle des Ausführungsbeispiels gemäß Fig. 5 sowohl nach Innen durch den inneren Siebkorb 230 als auch nach Außen durch den äußeren Siebkorb 231 abfließen kann.

Ein weiterer wesentlicher Unterschied der Anlage gemäß Fig. 5 gegenüber der im Zusammenhang mit den Fig. 1 bis 4 erläuterten Anlage besteht darin, daß im Falle des zweiten Ausführungsbeispiels das Filterband 262 der im übrigen nicht näher dargestellten Filterpresse direkt unterhalb des Entwässerungskorbes 204 angeordnet ist, so daß der volle hydrostatische Druck der über dem Filterband 262 befindlichen Schlammsäule am Filterband 262 zur Wirkung kommt, wodurch sich eine besonders effektive Entwässerung des zu entwässernden Schlamms ergibt. Im Falle des Ausführungsbeispiels gemäß Fig. 5 wird somit der Boden des Austragskanals von dem Filterband 262 der Filterpresse gebildet.

Im Falle sämtlicher Ausführungsbeispiele wird die Vorentwässerungsstufe vorzugsweise so betrieben, daß das Entwässerungsvolumen des Entwässerungskorbs 104 stets vollkommen mit Schlamm gefüllt ist, wobei die Menge des zugeführten, zu entwässernden Schlamms stets der abgeführten Menge an vorentwässertem Schlamm und Filtrat entspricht.

## Ansprüche

1. Vorentwässerungsstufe zum Entwässern von Schlamm und ähnlichen Substanzen, insbesondere als Vorstufe für eine Filterpresse, **gekennzeichnet durch**
einen Misch-und Reaktionsraum (102) mit einem Eingang (110) für Schlamm und Flockungsmittel zum kontinuierlichen Zuführen von Schlamm und Flockungsmittel in den Misch-und Reaktionsraum (102), eine Vorrichtung (124) zum kontinuierlichen Zuführen von Schlamm aus dem Misch-und Reaktionsraum (102) in einen Entwässerungskorb (104), einen Entwässerungskorb (104) mit mindestens einem vorzugsweise zylindrischen Siebkorb (130) mit vertikaler Zylinderachse zum hydrostatischen Entwässern des Schlamms, wobei innerhalb des Entwässerungskorbs (104) das Filtrat den mindestens einen Siebkorb (130) in radialer Richtung durchströmt, eine Vorrichtung (132, 134) zum Auffangen und Abführen des Filtrats,
einen unterhalb des Siebkorbs (130) angeordneten Austragskanal (150) zum Abführen des vorentwässerten Schlamms, sowie
eine im Austragskanal (150) angeordnete Einrichtung (158) zum Steuern der Menge des abzuführenden vorentwässerten Schlamms.

2. Vorentwässerungsstufe nach Anspruch 1, dadurch gekennzeichnet, daß der Misch-und Reaktionsraum (102) als vertikal stehender, U-förmiger Rohrkörper (106) ausgebildet ist, daß der Eingang (110) für Schlamm und Flockungsmittel am oberen Endbereich des einen Schenkels (108) des Rohrkörpers (106) angeordnet ist, und daß der obere Endbereich des anderen Schenkels (120) des Rohrkörpers (106) mit der Vorrichtung (124) zum kontinuierlichen Zuführen von Schlamm in den Entwässerungskorb (104) in Verbindung steht.

3. Vorentwässerungsstufe nach Anspruch 2, dadurch gekennzeichnet, daß der obere Endbereich des anderen Schenkels (120) bezüglich des Entwässerungskorbes (104) in einer solchen Höhe angeordnet ist, daß der aus dem oberen Endbereich des anderen Schenkels (120) austretende Schlamm durch freien Überlauf zum oberen Ende des Entwässerungskorbs (104) gelangt.

4. Vorentwässerungsstufe nach einem der Ansprüche 1 bis 3, dadurch gekennzeichnet, daß zum Zuführen von Schlamm aus dem Misch-und Reaktionsraum (102) in den Entwässerungskorb (104) ein nach oben offenes Kanalsystem (124) vorgesehen ist.

5. Vorentwässerungsstufe nach einem der vorhergehenden Ansprüche, dadurch gekennzeichnet, daß im Misch-und Reaktionsraum (102) vorzugsweise im Bereich des Eingangs (110) für Schlamm und Flockungsmittel eine Mischeinrichtung (116) insbesondere in Form eines Wirbelrads angeordnet ist.

6. Vorentwässerungsstufe nach einem der vorhergehenden Ansprüche, dadurch gekennzeichnet, daß ein einziger Siebkorb (130) vorgesehen ist und der Schlamm dem Inneren des Siebkorbs (130) zugeleitet wird.

7. Vorentwässerungsstufe nach einem der Ansprüche 1 bis 5, dadurch gekennzeichnet, daß zwei konzentrische Siebkörbe (230, 231) vorgesehen sind und der Schlamm dem zwischen den beiden Siebkörben (230, 231) vorhandenen Ringsraum zugeleitet wird.

8. Vorentwässerungsstufe nach einem der vorhergehenden Ansprüche, dadurch gekennzeichnet, daß der Entwässerungskorb (104) eine Vorrichtung (138) zum Reinigen der Öffnungen des mindestens einen Siebkorbs (130) umfaßt.

9. Vorentwässerungsstufe nach Anspruch 8, dadurch gekennzeichnet, daß die Reinigungsvorrichtung (138) von einer rotierenden, eine Wandung des mindestens einen Siebkorbs (130) überstreichenden Abstreifvorrichtung gebildet wird.

10. Vorentwässersstufe nach Anspruch 9, dadurch gekennzeichnet, daß die Abstreifvorrichtung innerhalb des schlammgefüllten Raumes angeordnet ist und mehrere vertikale, sich radial erstreckende Flügel (142) aufweist, die den -

schlammgefüllten Raum in mehrere Segmente aufteilen, und daß die Flügel (142) als Schlammschikanen dienende Öffnungen (148) aufweisen.

11. Vorentwässerungsstufe nach einem der vorhergehenden Ansprüche, dadurch gekennzeichnet, daß die im Austragskanal (150) angeordnete Einrichtung (158) zum Steuern der Menge des abzuführenden vorentwässerten Schlamms von einer steuerbaren bzw. regelbaren Klappe oder einem steuerbaren bzw. regelbaren Schieber gebildet ist.

12. Vorentwässerungsstufe nach einem der vorhergehenden Ansprüche, dadurch gekennzeichnet, daß zumindest ein Teil des Bodens des Austragskanals (150) von einem Filterelement (262) der Filterpresse gebildet ist.

13. Verfahren zum Betreiben einer Vorentwässerungsstufe nach einem der vorhergehenden Ansprüche, dadurch gekennzeichnet, daß der Entwässerungskorb (104) während des Betriebes mit Schlamm stets im wesentlichen gefüllt ist und daß die Menge des kontinuierlich zugeführten, zu entwässernden Schlamms stets der Menge von getrennt abgeführtem Filtrat und vorentwässertem Schlamm entspricht.

Fig.1

0 264 900

# Fig.2

0 264 900

# Fig. 3

# Fig.4

# Fig.5